# EUROPEAN PATENT SPECIFICATION

(11) **EP 1 909 196 B1**
(45) Date of publication and mention of the grant of the patent: **13.05.2015**
(21) Application number: 07018579.8
(22) Date of filing: 21.09.2007
(51) Int. Cl.: G06F 17/30

(54) **Discovery of services matching a service request**
Ermittlung von Diensten in Übereinstimmung mit einer Dienstanforderung
Découverte de correspondance de services d'une requête de services

(30) Priority: 04.10.2006 US 543635
(43) Date of publication of application: 09.04.2008
(73) Proprietor: SAP SE, 69190 Walldorf (DE)
(72) Inventor: Adam, Nabil, Manhasset, NY 11030 (US); Bornhoevd, Christof, Belmont, CA 94002 (US); Paliwal, Aabhas, North Brunswick, NJ 08902 (US)
(74) Representative: Hössle Patentanwälte Partnerschaft

(56) References cited:
- NEKTARIOS DOURDAS ET AL: "Discovering Remote Software Services that Satisfy Requirements: Patterns for Query Reformulation" ADVANCED INFORMATION SYSTEMS ENGINEERING LECTURE NOTES IN COMPUTER SCIENCE;;LNCS, SPRINGER-VERLAG, BE, vol. 4001, 5 June 2006 (2006-06-05), - 9 June 2006 (2006-06-09) pages 239-254, XP019036762 ISBN: 3-540-34652-X
- CELIK D ET AL: "A Semantic Search Agent Approach: Finding Appropriate Semantic Web Services Based on User Request Term(S)" INFORMATION AND COMMUNICATIONS TECHNOLOGY, 2005. ENABLING TECHNOLOGIES FOR THE NEW KNOWLEDGE SOCIETY: ITI 3RD INTERNATIONAL CONFERENCE ON CAIRO, EGYPT 05-05 DEC. 2005, PISCATAWAY, NJ, USA,IEEE, 5 December 2005 (2005-12-05), pages 675-687, XP010911098 ISBN: 0-7803-9270-1
- YIQIAO WANG, ELENI STROULIA: "Semantic Structure Matching for Assessing Web-Service Similarity" PROC. OF THE FIRST INT. CONF. ON SERVICE-ORIENTED COMPUTING - ICSOC 2003, TRENTO, ITALY, LNCS, [Online] vol. 2910, 15 December 2003 (2003-12-15), - 18 December 2003 (2003-12-18) pages 194-207, XP002462247 Retrieved from the Internet: URL:http://www.springerlink.com/content/hl uhelfexngr52ft/fulltext.pdf> [retrieved on 2007-12-11]
- MCILRAITH A S ET AL: "Semantic Web Services" IEEE INTELLIGENT SYSTEMS, IEEE SERVICE CENTER, NEW YORK, NY, US, March 2001 (2001-03), pages 46-53, XP002383221 ISSN: 1094-7167
- OBRST L ET AL: "Ontologies for corporate Web applications", AI MAGAZINE AMERICAN ASSOC. ARTIFICIAL INTELLIGENCE USA, vol. 24, no. 3, 2003, pages 49-62, ISSN: 0738-4602

## Description

### Technical Field

Examples relate generally to the field of electronic data processing and more particularly to processing of software services and software service requests.

### Background and Prior Art

The field of electronic data processing has reached a high level of development. Different and complex processes are executed in an automated way by computer systems that host software applications. Furthermore, communication infrastructures are available that allow for an exchange of electronic data. The development has lead to an availability of many services that provide an abundance of functionalities. A service may be a modular unit of a software application that is hosted by a computer system, for example, a server, a personal computer (PC), or a network of servers. Frequently, a service may be accessible to parties that may wish to invoke the service without having detailed knowledge about the service.

As an example, a service may be a Web service that may be accessible to users of the Internet to provide one or more specific functionalities. In a further example, a service may be accessible to employees of a company that has a business application platform to provide and access services and for composing business applications.

A party may create a service request to request a specific functionality that is to be provided by a service. In an example, the party may not know what services are available to provide the specific functionality. A discovery of services may include finding services that match the service request based on the requested functionality and descriptions of the services.

The document NEKTARIOS DOURDAS ET AL: "Discovering Remote Software Services that Satisfy Requirements: Patterns for Query Reformulation" (ISBN: 3-540-34652-X) describes a system for Web service discovery including changing of the ontology from that of the service query to that of the solution domain.

### Brief Description of Drawings

Fig. 1 is a block diagram of an example system with example data according to an embodiment.
Fig. 2 is a schematic diagram of an example ontology framework.
Fig. 3 is a diagram with concepts of two different example ontologies that are linked.
Fig. 4 is a table of example sets of keywords of six services of category weather.
Fig. 5 is a flow diagram of an example method according to an example.
Fig. 6 is an example algorithm for computing an enhanced request set of keywords.
Fig. 7 is an example algorithm for identifying a reduced representation of service sets of keywords.
Fig. 8 is an example algorithm for identifying a semantic service by computing a similarity between sets of keywords.
Fig. 9 is a block diagram of an example computer program product according to an example.

### Detailed Description

A party may have a service request that describes a request for a specific functionality. An automated and accurate discovery of a service may be used to find a service configured to match the service request. An automated discovery may be able to find a service to match the service request without a human intervention. An accurate discovery may mean that services that are discovered are able to provide the functionality as well as that services that are not discovered are not appropriate or do not have the right configuration.

An example includes a system for identifying a service to match the service request. The system may use an ontology to enhance a set of keywords reflated to the service request with an enhancement keyword. The system may further use the enhanced set to compute a similarity to a set of keywords related to a service.

The system may provide an automated discovery because the system may identify a service to match the service request based on the similarity without human intervention. The system may be accurate compared to a simple matching procedure of keywords from the service request and keywords from a service. This may be so because the enhancement keyword is identified in an objective way and may correspond to a standard term used for services. Therefore, a dependency of a discovery result from a service request using non-standard terms may be reduced. A service request may have non-standard terms because the service request may have been created without knowledge of standard terms used for services. Therefore, using the enriched enhanced set of keywords may lead to a discovery of more services that match the service request. Furthermore, having more services that may match the service request and computing the similarity of the services may result in less discovered services that do not match the service request. A reason for this may be an increased similarity competition of more services that may match the service request. Furthermore, using an ontology may reduce a dependency on accidental correspondences of keywords from a service request and a service. In an example, using an ontology may allow for distinguishing between missing information about a functionality of a service and negative information about a functionality of a service. This may lead to discovering more services that may match the service request.

Furthermore, the system may be used to identify a service that matches the service request and that is not semantically annotated because the system uses keywords related to the service. The system may be used without a semantic, possibly manually created annotation of the service. The computed similarity may be used to evaluate which service may match the service request in a better way when more than one service is discovered. Furthermore, the system may be high-performance because an ontology is used to identify the enhancement keyword. This may be faster to compute than for example identifying a concept of an ontology which represents the service request. Furthermore, calculating a similarity between two different sets of keywords may be faster than for example doing subsumption calculations between different concepts of an ontology. A reason for this may be that a service request may be formulated in such a way that identifying an ontology concept representing the service request may include a number of approximations. Representing a service by a set of keywords may be faster and more memory efficient than representing a service by a concept of an ontology.

A further example includes a method for identifying a service to match the service request. The method may include using an ontology to enhance a set of keywords related to the service request. The method may further include using the enhanced set to compute a similarity to a set of keywords related to a service.

The method may be a computer-implemented method and may provide an automated discovery of a service to match the service request. Using an ontology may render the method more accurate than a purely keyword-matching procedure. The method may process services without semantic annotation rendering a human intervention less likely and the processing high-performance and memory efficient. The method may further be high-performance because calculating a similarity may be faster than using an ontology to verify if a service matches a service request.

A further example includes a computer program product for identifying a service to match the service request. The computer program product may include instructions for using an ontology to enhance a set of keywords related to the service request. The method may further include instructions for using the enhanced set to compute a similarity to a set of keywords related to a service.

The computer program product may have instructions that are executable by a computer system and that enable such a computer system to execute an automated discovery that is accurate, fast, and memory efficient.

The following description of examples includes details for illustrating and is not intended to be exhaustive. For purposes of explanation, specific details are set forth in order to provide a thorough understanding of examples. A person skilled in the art may appreciate that further examples may be practiced with details that differ from the specific details.

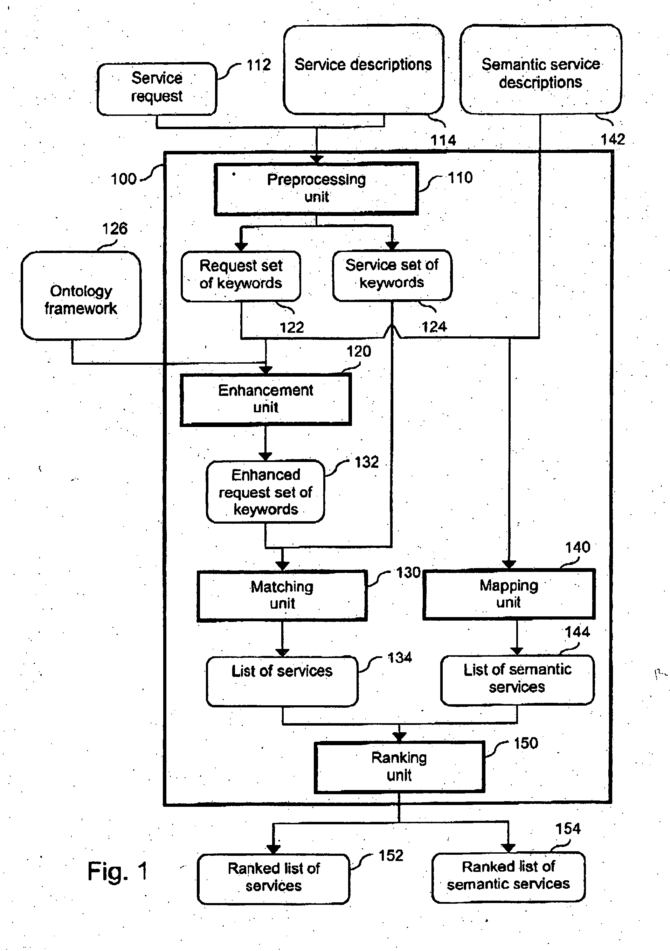

Fig. 1 is a block diagram of an example system 100 with example data according to an example. The example system 100 includes units such as a preprocessing unit 110, an enhancement unit 120, a matching unit 130, a mapping unit 140, and a ranking unit 150. In an example, the system 100 includes further internal data items such as a request set 122 of keywords, an enhanced request set 132 of keywords, a service set 124 of keywords, a list 134 of services, and a list 144 of semantic services. In an example, the example system 100 may be related to external data items such as a service request 112, service descriptions 114, semantic service descriptions 142, an ontology framework 126, a ranked list 152 of services, and a ranked list 154 of semantic services. Arrows between a unit of the system 100 and a data item indicate a functional relation between the unit and the data item. In an example, a data item connected with an arrow pointing at a unit may be a part of input data of the unit. Similarly, a data item connected with an arrow pointing away from a unit may be a part of output data of the unit.

The system 100 may include a computer system and an operating system program. The system 100 may host one or more application programs each one of which may represent one or more of the units 110, 120, 130, 140, 150 of the system 100. In a further example, more than one application program may represent one unit of the system 100. The system 100 may for example be an application server, an Internet server, a PC, or a network of servers. The computer system may include a common data storage which may be used by units of the system or separate data storages each one of which may be used by only one unit of the system. Data storages may be a hard disc drive or a random access memory (RAM) for storing and retrieving data for the processing of one of more than. The application programs may include instructions that may be executed by a computer system and configure the computer system to become the system 100. To do so the system 100 may include one or more central processing units (CPUs) that may be coupled communicatively to each other or to external systems for data exchange. A communication infrastructure may include for example an interface to the Internet, Internet servers, and the Internet. In a further example, a communication infrastructure may include a part of an intranet of a company and servers connected to the intranet.

The preprocessing unit 110 of the system 100 may have input data that includes the service request 112. The preprocessing unit 110 may transform the service request 112 to the request set 122 of keywords.

The service request 112 may be created for example by a designer of a composite Web service that uses one or more standard functionalities. The standard functionalities may be provided as services through the Internet and the designer may desire to use such a Web service without knowing which one. In a further example, the service request 112 may be created by a designer of a business application to model a business process. The business application may be created on a platform of enterprise services that provide standard functionalities for business applications. The designer may desire to use one or more such services from different areas for the business application. Therefore, a service request 112 may be created as a file or a document with terms that may describe the required functionality according to the background of the designer. In a further example, the service request 112 may be generated by a computer program and may be desired be matched by a service at runtime of the computer program.

The preprocessing unit 110 of the system 100 may further have input data that include the service descriptions 114. The preprocessing unit 110 may transform the service descriptions 114 to the service set 124 of keywords. The service descriptions 114 may be documents or files from a database that describe and identify available services. The services may be described according to a standard language, for example, the Web Service Description Language (WSDL). The service descriptions may be provided by a Universal Description, Discovery, and Integration service (UDDI).

In an example, the preprocessing unit 110 may process the service request 112 and the service descriptions 114 in an identical way. In a further example, the service descriptions 114 may already be processed so that the preprocessing unit 110 may leave the service descriptions 114 unchanged. The preprocessing unit 110 may be configured to parse the service request 112 and to identify the keywords of the request set 122 of keywords. This may include transforming terms of the service request 112 into terms in a standardized format and identify the keywords of the request set 122 with the standardized terms. This may include one or more of the following processes: removal of markups, translation of upper case characters into lower case, punctuation removal, and white space removal used as a term delimiters, stoplist removal and stemming to strip word endings.

In an example, the preprocessing unit 110 may be configured to parse a document related to the service, for example, a service description retrieved from the service descriptions 114. The preprocessing unit 110 may be further configured to identify the keywords of the service set of keywords with terms in a standardized format. The standardized format may be identical to the standardized format into which terms of the service request are transformed. In an example, the preprocessing unit 110 may identify a keyword of the further set of keywords with a term extracted from a document tag of a document related to the service or a tag of an operation parameter of the service. A tag of an operation parameter of the service may be used to describe a function of the operation parameter that may be for example an input parameter or an output parameter of the service.

The enhancement unit 120 may be configured to compute an enhanced set of keywords that may be identical to the enhanced request set 132 of keywords. The enhanced request set 132 may include keywords of the request set 122 of keywords. The enhanced request set 132 may further include a related keyword that may be identical to an enhancement keyword. The enhancement keyword may be represented by an ontology concept that has a relation to a further ontology concept representing a keyword of the request set 122. In an example, the enhanced request set 132 may include many enhancement keywords identified using an ontology. An ontology may be an element of the ontology framework 126 that includes one or more ontologies. The enhancement unit 120 may use the ontology framework 126 as input to identify the enhancement keyword.

An ontology may be defined by having the following features: the ontology may have concepts and the concepts may have properties or may have inheritance relations. A property of a concept may be an object property having a further concept as a property value or a datatype property having a datatype as a property value. A concept may be related to a further concept by an inheritance relation so that the further concept has properties that include the properties of the concept. An ontology may have further features that may or may not be relevant to examples. As an example, an ontology may be used to model data structures in such a way that data contents can be described. An ontology may be readable by a machine and may enable the machine to do reasoning for concepts of an ontology, As an example, a machine may do a subsumption of a concept that may include creating an inheritance relation between the concept and a subconcept or a superconcept of the concept. An ontology may be classified according to its expressiveness. Examples for different web ontology languages may be OWL Lite, OWL DL, or OWL Full. Furthermore, ontologies may be classified according to how specific they are. As an example, a domain ontology may be specific to a domain and a domain independent ontology may be more general by having concepts from different domains.

The ontology concept representing the enhancement keyword may be a concept of a first ontology. The further ontology concept representing the keyword of the request set 122 may be a concept of a second ontology. The first ontology may be linked to the second ontology by a relation between a first concept of the first ontology and a second concept of the second ontology. Such an ontology linking may also include a third ontology having a third concept with a relation to the first concept and a fourth concept having a relation to the third concept and the second concept. A relation between concepts of different ontologies may be established for example by the concepts having identical names, similar names or synonymous names. The relation between the concepts may also be implied by properties of the concepts that have identical names, similar names or synonymous names.

In an example, the enhancement unit 120 may compute the enhanced request set 132 that may include one or more than one enhancement keyword. In an example, one or more keywords may correspond to names of the concepts that represent the one or more keywords. A correspondence between a keyword and a name of a concept may be established for example by the keyword and the name being identical, similar, or synonymous. In an example, an enhancement keyword may be represented by a concept of a domain ontology or by a domain independent ontology.

Furthermore, the enhancement unit 120 may identify a further enhancement keyword that is represented by a concept that is a concept of a domain independent ontology. The further enhancement keyword may be considered a root keyword of the service request represented by a root concept. The root concept may be identified by having a relation, for example an inheritance relation, to one or more ontology concepts that represent one or more keywords of the request set 122. In an example, the root concept may have an inheritance relation to a set of concepts that represent all keywords of the request set 122. The enhancement unit 120 may further specify a service category of a service that may match the service request by using the root concept. In an example, the services may be categorized in the UDDI. The services may be categorized by using a parameter categoryBag that may be an element of models for describing services, for example TModels. In a further example, the enhanced request set may have only one related keyword and this may be the root keyword.

The matching unit 130 may use the enhanced request set 132 of keywords and the service set 124 of keywords as input and may be configured to identify a service configured to match the service request. The service may be represented and identified by the service set 124 of keywords. The matching unit 130 may be configured to decide if the service matches the service request by computing a similarity between the enhanced request set 132 of keywords and the service set 124 of keywords having the keywords of the service.

The matching unit 130 may be configured to compute the similarity by identifying a reduced representation of the enhanced request set 132 of keywords and a further reduced representation of the service set 124 of keywords. The matching unit 130 may be configured to identify the similarity with a value to which the reduced representation and the further reduced representation are mapped. The reduced representation and the further reduced representation may be mapped to the value by a scalar product type of mapping. In an example, a cosine measure may be used. For this, the reduced representation and the further reduced representation are represented as vectors in a multi-dimensional vector space of keywords. The distance between points identified by the vectors may be measured according to the scalar product or cosine measure.

The reduced representation and the further reduced representation may be computed by projecting a vector representing the enhanced request set 132 of keywords and a vector representing the service set 124 of keywords onto a subspace. The subspace may include representations of selected correlations between keywords of documents related to a set of services and the documents of the set of services. In an example, the subspace may be spanned by correlation vectors that represent the selected correlations. The correlation vectors may be selected so that based on specific documents the highest correlations between keywords are represented. The correlation vectors may be calculated based on the specific documents related to a set of services, for example on the service descriptions. In an example, the documents may be a set of service sets of keywords processed by the preprocessing unit 110. In an example, the correlation vectors may be eigenvectors of eigenvalues of a correlation matrix. The correlation matrix may be defined by specifying which keyword is included how many times in which document from the set of documents. In an example, the eigenvectors may be selected by being eigenvectors of the 100 highest eigenvalues of the correlation matrix.

In an example, the matching unit 130 may be configured to compute the similarity by using latent semantic indexing. As a person skilled in the art may appreciate, techniques of latent semantic indexing may include computing reduced representations from sets of keywords by projecting onto subspaces. The subspaces may be spanned by eigenvectors of a correlation matrix describing the relation between keywords and documents in which the keywords occur.

The matching unit 130 may be configured to have as output the list 134 of services. The list 134 of services may include the identified service that may be ranked with respect to a further identified service according to the similarity between the enhanced request set 132 of keywords and the service set 124 of keywords. In an example, the identified service may be related to a greater similarity value than the further identified service and accordingly may have a higher position in the list 134 of services. A higher position may be identified with a better matching of the service request 112 or with a higher probability that the service fulfils the requested functionality.

The ranking unit 150 may be configured to further rank the identified service with respect to a further service based on any one of the following criteria: quality weights for quality of service parameters of the identified service and a usage index of the identified service. As a result the ranked list 152 of services may be created. In an example, quality weights and usage index may be used sequentially to filter or modify the list 134 of services. The ranked list 152 may reflect functional and non-functional criteria for selecting a service.

Service parameters for which quality weights may be used may be parameters such as: execution attributes describing for example latency, accuracy, and throughput; security attributes describing for example encryption and authentication; availability attributes describing for example probability of the service being available; execution costs describing for example how much will a single execution cost; and reliability attributes describing for example a reliability of the service publishing company. Each service parameter that is used by the ranking unit 150 may be related to a quantity called quality weights. A quality weight may represent a mismatch between an advertised quality of a service and a delivered quality of a service. The quality weights of a specific web services may be a set of parameters that describe the quality of the service and that may be desired to be maximized or minimized. As an example, response time and execution time may be desired to be minimized while availability may be desired to be maximized. In an example, the ranking unit 150 may provide a ranking based on a rating of how close the execution of a Web service is to an advertised value of the Web service. Such a ranking may modify the ranking of the list 134 of services computed according to a similarity. A degree of modification may be specified by using weight factors to the different ranking criteria. In an example, a concept may be used that is substantially similar to quality of service parameters of a "Metadata Constraint" category in an OWL-S based architecture. Quality weights may also be specified as non-functional parameters of a service that may be used for identifying the service that matches best the given service request. Furthermore, the usage index may be used by the matching unit 150 to modify a ranking of the identified services. In an example, it may be desired to use a service with a high usage index and accordingly rank a service with a high usage index a specific number of positions higher than a ranking without the usage index.

The system 100 may further have the mapping unit 140 configure to discover semantic services that are configured to match the service request 112. The mapping unit 140 may be configured to identify a semantic service described and identified by the semantic service descriptions 142. The semantic service may be annotated according to a service ontology. The mapping unit 140 may identify a semantic service by identifying a request ontology having concepts representing one or more keywords of the request set 122. The mapping unit 140 may use a mapping between the concepts representing the one or more keywords and concepts of a semantic service to compute a number of concepts related to the service request and the semantic service. The mapping between different concepts may relate concepts that have identical names, similar names or synonymous names. The mapping unit 140 may use the number of related concepts to create the list 144 of semantic services. In an example, the list 144 of semantic services may be ranked according to the number of common concepts.

The ranking unit 150 may modify the ranking of the list 144 of semantic services using quality weights or usage index to compute the ranked list 154 of semantic services, In a further example, the ranking unit 150 may create a single output of a list of ranked services that includes non-annotated services from the list 134 of services and semantic services from the list 144 of semantic services.

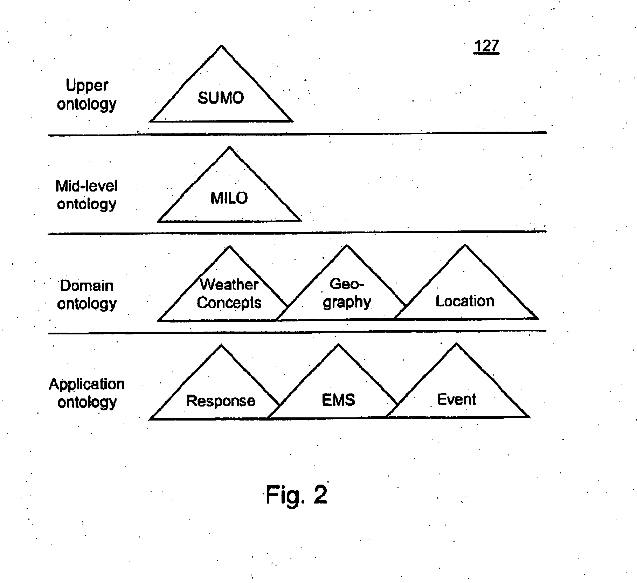

Fig. 2 is a schematic diagram of an example ontology framework 127. The example ontology framework 127 may be an example of the ontology framework 126 (see Fig. 1). The example ontology framework 127 may have an upper ontology, for example a suggested upper merged ontology (SUMO) according to the Institute of Electrical and Electronics Engineers (IEEE). The upper ontology may serve as a starting point to retrieve basic and universal information. The upper ontology may by a domain independent ontology that provides a common knowledge base from which domain specific ontologies maybe derived.

The example ontology framework 127 may have a mid-level ontology, for example a mid-level ontology (MILO) derived from SUMO. The MILO may serve as a bridge between the conceptual elements specified in the upper ontology and the underlying domain specific elements expressed in the lower level ontologies.

The example ontology framework 127 may have a domain ontology level with ontologies expressing domain specific concepts and relationships. The domain specific elements may maintain contextual integrity to the domain and the corresponding relationships may adhere to the domain constraints and assumptions. In an example, the domain ontology level may include a WeatherConcepts ontology that provides information for decision making during events that may take into account varying weather conditions. The WeatherConcepts ontology may serve as a knowledge base to answer questions regarding wind speed, precipitation, or humidity in the atmosphere. The domain ontology level may include a Geography ontology that provides further information regarding places and structures. As an example, the Geography ontology may have concepts representing buildings and addresses that may be related to concepts representing a city and a zip code. The domain ontology level may include a Location ontology that includes concepts for identifying locations such as latitude and longitude.

The example ontology framework 127 may have an application ontology level with ontologies having concepts of application programs. In an example, an application ontology may be used to annotate a semantic service. The application ontology level may have a Response ontology for describing responses of application programs such as failures, terminations, or exceptions. The application ontology may further have an ontology for enhanced messaging services (EMS) and an Event ontology describing events of an application program.

In an example, the SUMO may be used to identify a root concept that is a direct or indirect super-concept of concepts representing all or a substantial number of keywords of a service request. The root concept may represent or be identical to a related keyword that is an enhancement keyword. The root concept may be used to identify a service category and the service category may be used to index and limit the services that may be considered for matching to the service request. In an example, ontologies of the domain ontology level may be used to identify a sub-concept of a concept representing a keyword of a service request. Such a sub-concept may represent or be identical to a related keyword that is an enhancement keyword. In an example, the sub-concept may be useful for matching it to keywords of a service that have been obtained from operating parameters of the service.

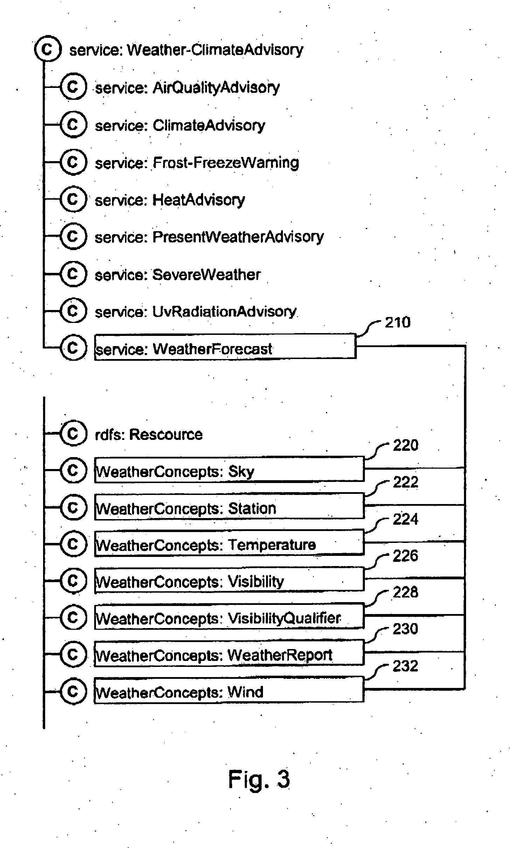

Fig. 3 is a diagram with concepts of two different example ontologies that are linked. The first example ontology may be an upper level ontology or a mid-level ontology with concepts that represent different services. One of the services represented by concepts of the ontology is concept 210 service: WeatherForecast. The second example ontology may be a WeatherConcepts ontology from a domain ontology level and may have the following concepts: concept 220 WeatherConcepts: Sky, concept 222 WeatherConcepts: Station, concept 224 WeatherConcepts: Temperature, concept 226 WeatherConcepts: Visibility, concept 228 WeatherConcepts: VisibilityQualifier, concept 230 WeatherConcepts: WeatherReport, concept 232 WeatherConcepts: Wind.

In an example, the first ontology may be linked to the second ontology because a keyword of the service request may be weather report and the keyword may be represented by the concept 230 WeatherConcepts: WeatherReport. The concept 230 WeatherConcepts: WeatherReport may have been found by a standard string search routine. Following this, the concept concept 210 service: WeatherForecast of the first ontology may be identified based on having the synonymous names WeatherForecast and WeatherReport. The concept 210 service: WeatherForecast may be used to represent an enhancement keyword, for example, weather forecast. Furthermore, the remaining concepts 220, 222, 224, 226, 228, and 232 of the second ontology may be related to the concept 210 service: WeatherForecast of the first ontology. In an example, this may be done because the remaining concepts may have names that are sufficiently similar to the concept 210 service: WeatherForecast.

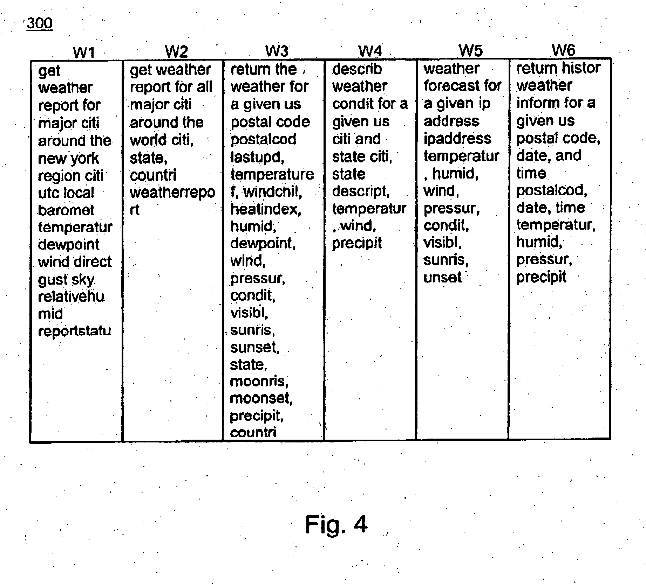

Fig. 4 is a table 300 of example sets of keywords of six services of category weather. The example sets are an output of a preprocessing unit of an example. The example sets are a stemmed version of Web services. The preprocessing unit of the example implementation has parsed documents related to each of the six Web services and identified the keywords of each one of the six sets with terms in a standardized format, for example, with stemmed terms.

The example implementation was built in Java, JSP, and Java Beans running under the Apache Tomcat web server. Latent semantic indexing (LSI) was used in connection with a free software environment for statistical computations that is a GNU project called R project. A mapping unit of the example implementation included two sub components. A first sub component was an ontology reasoner, Racer, and a second component was a description logic (DL) implementation group (DIG) interface component. Racer may implement the HTTP-based quasi-standard DIG for interconnecting DL systems with interfaces and applications using an XML-based protocol. The example implementation provided the ability to load ontologies. Once loaded, an ontology may be queried to extract the relevant concepts of an ontology framework. Additional WSDL files from xmethods (available in the Internet from XMethods, Inc.) were used as well as results from individual file searches using search engines such as Google.

The example implementation was used with a collection of data items that included 25 service requests and 800 service descriptions. Such a collection was small enough for computing and storing LSI representations using standard computer resources. In the example implementation, the collection of web services was classified into 30 categories. A statistical analysis of results of the example implementation showed that using enhanced request sets computed from request sets gave better results than using keywords of the request sets. Furthermore, using categorized services gave also better results than using non-categorized services. As a person skilled in the art may appreciate desirable features of examples may be made clear in a more detailed discussion of results for the six sample service sets.

Table 300 includes service sets of W3 and W6 that provide weather information based on a zip code. The input and output parameters of service W3 and W6 are different. The words of the description, as well as the input and output terms, have been selected for indexing. Each service set has been indexed based on the terms in the document related to the service. Entries in the correlation matrix were frequencies with which each keyword occurred in each document related to a service. The correlation matrix served as an input for an eigenvector analysis, more particularly singular value decomposition (SVD) analysis.

In the example implementation the service request was: Find the temperature and rainfall based on a given zip code. Simple term matching queries would identify service sets of W1, W4, and W5 that have keywords matching one of the keywords of the service request. Service sets of W2, W3, and W6 would be missed by the simple term matching queries because no keywords were common to a keyword of the service request. Such results of simple term matching may be checked manually by a person skilled in the art.

The example implementation computed following rounded similarity values for the six services sets that have been categorized and an enhanced request set: 9.938 for W6, 9.067 for W3, 4.850 for W1, and smaller values for the remaining service sets. Such a result demonstrates that according to an example, W6 and W3 may be configured to match the service request and the result may be identified with an optimal result obtainable from a manual procedure. For comparison, similarities have been also computed for the six categorized service sets and a request set (without enhancement keywords) giving following rounded values: 4.323 for W1, 3.506 for W6, 2.923 for W3, and smaller values for the remaining service sets. According to such a result, W1 and W3 may be identified as being able to match the service request which may be considered as a non-optimal or partly correct result.

Furthermore, the example implementation computed the following rounded similarity values for the six services sets that have not been categorized and an enhanced request set: 3.504 for W3, 2.458 for W5, 1.821 for W6, and smaller values for the remaining service sets. Such a result may be considered non-optimal or partly correct. For comparison, similarities have also been computed for the six service sets being not categorized and a request set (without enhancement keywords) giving following rounded values: 0.790 for W4, 0.585 for W2, 0.578 for W3, and smaller values for the remaining service sets. According to such a result, W4 and W2 may be identified as being able to match the service request which may be considered as a non-optimal or completely incorrect result.

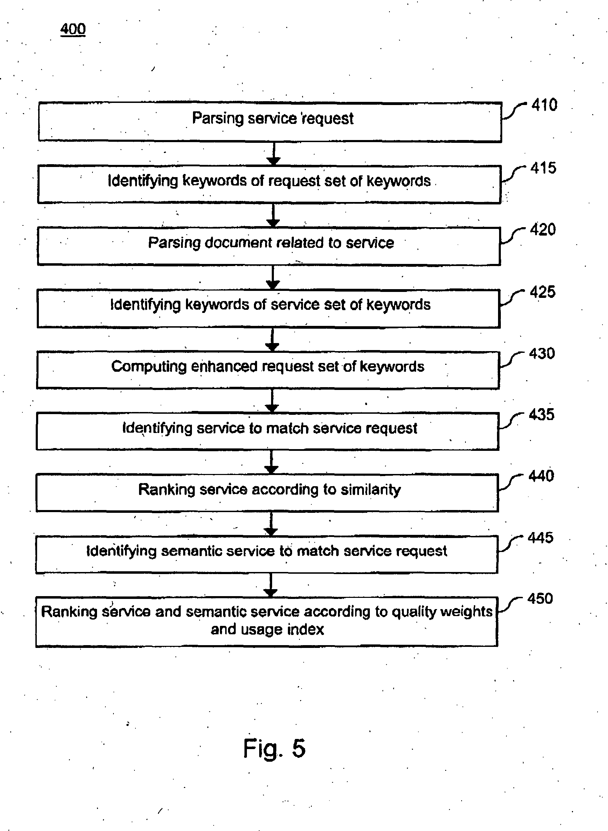

Fig. 5 is a flow diagram of an example method 400. The method 400 may be a computer implemented method for identifying a service matching a service request. A person skilled in the art may appreciate that a further method may include operations in an order that is different from the order of the method 400.

The method 400 may include parsing 410 a service request and identifying 415 keywords of a request set of keywords with terms of the service request in a standardized format. In an example, parsing 410 the service request may lead to identifying individual terms from the service request. The individual terms may be transformed into a standardized format by creating a stemmed version of the individual terms. Identifying 415 the keywords of the service request with the transformed individual terms may follow.

The method 400 may further include parsing 420 a document related to a service and identifying 425 keywords of a service set of keywords with terms of the document in a standardized format. The document related to the service may be a service description from a publicly available database. In an example, parsing 420 the document may include parsing tags of the document or tags of elements of the document, such as a document tag or a tag of on operation parameter of the service. As a result of parsing 420 individual terms may be identified. In an example the individual terms may be transformed into individual terms in a standardized format in a way identical to which the individual terms from the service request are transformed. Therefore, the keywords derived from the service request may be directly matched with keywords derived from the document related to the service. In a further example, the document related to the service may already have terms in a standardized format so that parsing and a transformation may not be required.

Computing 430 an enhanced request set of keywords comprising keywords of the request set and a related keyword may then be performed. The related keyword may be represented by an ontology concept that has a relation to a further ontology concept representing a keyword of the request set. A relation between a keyword and an ontology concept representing the keyword may be established by the ontology concept having a name that is identical, similar, or synonymous to the keyword. Computing 430 an enhanced request set may include identifying a domain ontology and searching the domain ontology to identify the ontology concept representing the related keyword- The ontology concept and the further ontology concept may be elements of an identical ontology or may be elements of different ontologies that are linked according to an ontology framework. Within an ontology framework, a first ontology may be linked to a second ontology by a relation between a first concept of the first ontology and a second concept of the second ontology. Such a relation may be identified by comparing a name of the first concept with a name of the second concept and deriving for example an inheritance relation. In an example, the first ontology may be from a higher level of an ontology framework compared to the second ontology. Therefore, the first concept may be identified as a super-concept of one or more concepts of the second ontology including the second concept. In a further example, the relation may be different: a relation may be identified by the first concept and the second concept having an identical, similar, or synonymous name. In a further example, a relation may be identified manually.

In a further example, the enhanced request set may include many related keywords. One of the many related keywords may be a further related keyword that is represented by a concept of a domain independent ontology. The further related keyword may be used for specifying a service category of the service. In such a further example, computing 430 the enhanced request set may be executed prior to parsing 420 a document and to identifying 425 keywords of the service set because the further related keyword may be used to identify services of the specified category.

The method 400 may include identifying 435 a service configured to match the service request by computing a similarity between the enhanced request set of keywords and a service set of keywords of the service, In an example, the similarity may be represented by a similarity value. In a further example, the similarity may be represented by a set of values capturing different aspects of the similarity. According to a computed similarity value, the service may be specified to be configured to match the service request or not to be configured to match the service request. In an example, this may depend on if the similarity value is larger than a threshold value. In a further example, this may depend on a result of a comparison of similarity values computed for further services.

Identifying 435 the service may include using techniques of latent semantic indexing applied to the enhanced request set and the service set: identifying a reduced representation of the enhanced request set, identifying a further reduced representation of the service set, identifying the similarity with a value to which the reduced representation and the further reduced representation are mapped, for example using a cosine measure. According to latent semantic indexing, the reduced representation and the further reduced representation may include representations of selected correlations. In an example, the selected correlations may be eigenvectors of a correlation matrix. The correlation matrix may describe correlations between keywords of documents related to a plurality of services and the documents related to the plurality of services. Such a correlation matrix may be calculated for a specified set of services, for example, services of an identical service category. In an example, entries of the correlation matrix may specify which keyword occurs in which document how many times. In an example, such entries may be normalized by how many times the keyword occurs in total. In an example, the correlations may be selected by selecting an eigenvalue and a corresponding eigenvector to the eigenvalue. The eigenvalue may be selected because it is larger than a threshold value or because it belongs to a set of large eigenvalues, the set having a predetermined number of elements. Reduced representations of a set of keywords may be computed by representing the set of keywords by a vector and project the vector onto a vector space spanned by selected eigenvectors.

The method 400 may include ranking 440 the identified service with respect to a further service according to the similarity between the enhanced request set and the service set. Ranking 440 the identified service with respect to many other services may be used to decide which service is configured to match the service request or provides a functionality to fulfill the service request.

In the event of that semantic services are available or accessible, the method 400 may include identifying 445 a semantic service that may be configured to match the service request. The semantic service may be annotated according to a service ontology. Identifying 445 the semantic service may include identifying a request ontology having request concepts representing one or more keywords of the request set. Identifying 445 may further include using a mapping between the request concepts and concepts of the semantic service to compute a number of concepts related to the service request and the semantic service. A similarity value for a semantic service and a service request may be identified with the number of concepts that are related to the semantic service and the service request. Such a relation may include a mapping between concepts of the one or more than one ontology.

The method may include further ranking 450 the identified service with respect to a further service based on any one of the following criteria: quality weights for quality of service parameters of the identified service and a usage index of the identified service. In an example, a set of services may be specified as matching the service request according to the similarities of the services of the set. The services of the set may be ranked according to the similarities and the similarity based ranking order may be modified by further ranking 450. Such a modification by further ranking 450 may include using relative weights given to a ranking order based on similarity and to ranking order based on quality weights and usage index. In an example, the ranking positions of a service in different ranking lists may be simply added and a position in a new ranking list may be according to the sum. In an example, one ranking list may be based on similarity specifying functional suitability, a further ranking list may be based on quality weights, and a further ranking list may be based on a usage index.

In a further example, the services may not be ranked according to similarity values and ranking 450 may be the only ranking operation. In a substantially similar way, the method 400 may include further ranking 450 identified semantic services that may or may not be ranked. The services and the semantic service may be ranked separately in different ranking orders or together in a common ranking order.

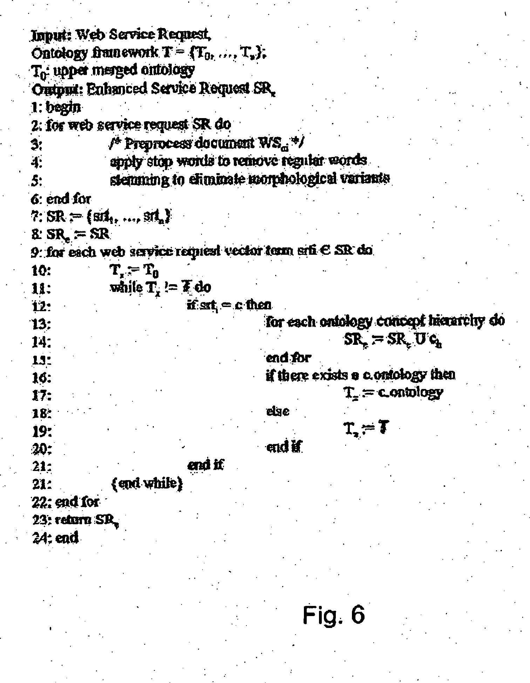

Fig. 6 is an example algorithm for computing an enhanced request set of keywords. The example algorithm specifies input parameters and output parameters and includes a pseudo-code describing processing operations of the algorithm. Operations of the algorithm include identifying keywords of the request set and computing the enhanced request set. As a person skilled in the art will appreciate, the example algorithm for computing the enhanced request set may be implemented in different computing languages.

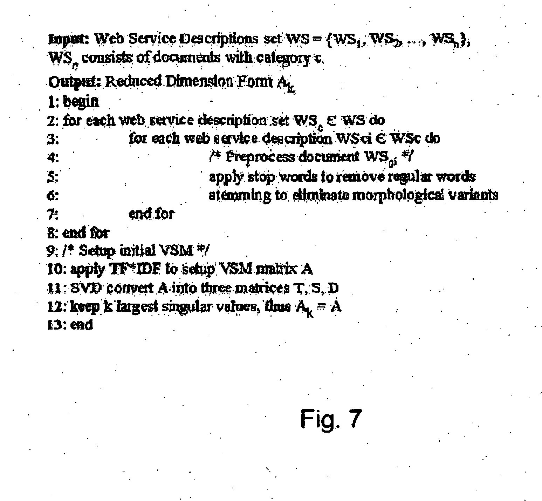

Fig. 7 is an example algorithm for identifying a reduced representation of service sets of keywords. The example algorithm specifies input parameters and output parameters and includes a pseudo-code describing processing operations of the algorithm. Operations of the algorithm include identifying keywords of service descriptions being examples of documents related to services and identifying a reduced representation of the service set.

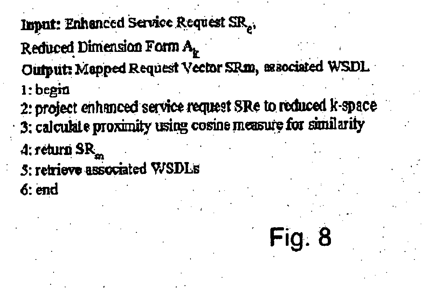

Fig. 8 is an example algorithm for identifying a semantic service by computing a similarity between sets of keywords. The example algorithm specifies input parameters and output parameters and includes a pseudo-code describing processing operations of the algorithm. Operations of the algorithm include identifying a reduced representation of the request set, calculating similarities between the request set and service sets using reduced representations, and retrieving the services in, for example, WSDL format represented by the reduced representation.

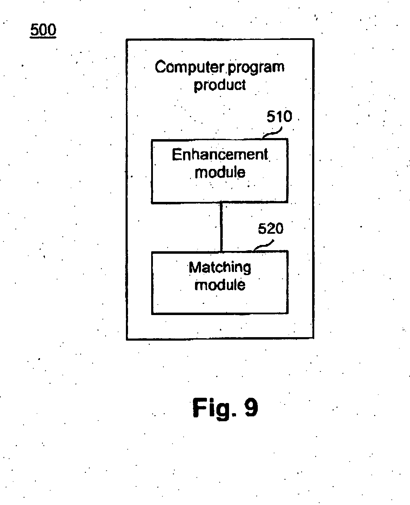

Fig. 9 is a block diagram of an example computer program product 500. The example computer program product 500 may have instructions that can be loaded into a computer system and that are executable by the computer system. The computer program product 500 may include instructions of an enhancement module 510 and a matching module 520.

The enhancement module 510 may be configured to compute an enhanced request set of keywords including keywords of a request set and a related keyword. The request set may have keywords of the service request and the related keyword may be represented by an ontology concept that has a relation to a further ontology concept representing a keyword of the request set.

The matching module 520 may be configured to identify a service configured to match the service request by computing a similarity between the enhanced request set and a service set of keywords of the service.

As noted above, examples within the scope of the present invention include computer program products. The computer program products may be stored on computer-readable media for carrying or having computer-executable instructions or data structures. Such computer-readable media may be any available media that can be accessed by a general purpose or special purpose computer. By way of example, such computer-readable media may include RAM, ROM, EPROM, EEPROM, CD-ROM or other optical disk storage, magnetic disk storage or other magnetic storage devices, or any other medium that may be used to carry or store desired program code in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is an example of a computer-readable medium. Combinations of the above are also to be included within the scope of computer-readable media. Computer-executable instructions include, for example, instructions and data which cause a general purpose computer, a special purpose computer, or a special purpose processing device to perform a certain function or group of functions. Furthermore, computer-executable instructions include, for example, instructions that have to be processed by a computer to transform the instructions into a format that is executable by a computer. The computer-executable instructions may be in a source format that is compiled or interpreted to obtain the instructions in the executable format. When the computer-executable instructions are transformed, a first computer may for example transform the computer-executable instructions into the executable format and a second computer may execute the transformed instructions. The computer-executable instructions may be organized in a modular way so that a part of the instructions may belong to one module and a further part of the instructions may belong to a further module. However, the differences between different modules may not be obvious and instructions of different modules may be intertwined.

Examples have been described in the general context of method operations, which may be implemented in one embodiment by a computer program product including computer-executable instructions, such as program code, executed by computers in networked environments. Generally, program modules include for example routines, programs, objects, components, or data structures that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such operations.

Some examples may be operated in a networked environment using logical connections to one or more remote computers having processors. Logical connections may include for example a local area network (LAN) and a wide area network (WAN). The examples are presented here by way of example and not limitation. Such networking environments are commonplace in office-wide or enterprise-wide computer networks, intranets and the Internet. Those skilled in the art will appreciate that such network computing environments will typically encompass many types of computer system configurations, including personal computers, hand-held devices, multi-processor systems, microprocessor-based or programmable consumer electronics, network PCs, minicomputers, mainframe computers, and the like. Examples may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An example system for implementing the overall system or portions might include a general purpose computing device in the form of a conventional computer, including a processing unit, a system memory, and a system bus that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The drives and their associated computer-readable media provide nonvolatile storage of computer-executable instructions, data structures, program modules and other data for the computer.

Software and web implementations could be accomplished with standard programming techniques with rule based logic and other logic to accomplish the various database searching steps, correlation steps, comparison steps and decision steps. It should also be noted that the word "component" as used herein and in the claims is intended to encompass implementations using one or more lines of software code, hardware implementations, or equipment for receiving manual inputs.

## Claims

1. A system (100) comprising:
a preprocessing unit configured to receive a service request and to transform the service request to a request set of keywords, which includes parsing the service request and identifying keywords of the request set of keywords, whereby terms of the service request are transformed into terms in a standardized format and the keywords of the request set are identified with the standardized terms, wherein such preprocessing includes at least one of the following processes: removal of markups, translation of upper case characters into lower case, punctuation removal, white space removal used as a term delimiter, stoplist removal and stemming to strip word endings; and
an enhancement unit (120) configured to compute an enhanced request set (132) of keywords comprising keywords of the request set (122) of keywords of the service request (112) and an enhancement keyword, the enhancement keyword being represented by a concept of a first ontology that has a relation to a concept of a second ontology representing a keyword of the request set of keywords, the first ontology and the second ontology being elements of an ontology framework, the ontology framework having an upper ontology, a mid-level ontology and a domain ontology level, the upper ontology being used to identify a root concept that is a direct or indirect super-concept of concepts representing all or a substantial number of keywords of the service request, ontologies of the domain ontology level being used to identify a sub-concept of a concept representing a keyword of the service request and the mid-level ontology serving as a bridge between the upper ontology and the domain ontology level; and
a matching unit (130) configured to identify a service to match the service request (112) by computing a similarity between the enhanced request set (132) of keywords and a service set (124) of keywords of the service using projections of a multi-dimensional vector space representing the enhanced request set of keywords and the service set of keywords onto a subspace that includes representations of selected correlations between keywords of documents related to a set of services and the documents of the set of services, resulting in a list of services including the identified service which is ranked with respect to a further identified service according to the similarity between the enhanced request set of keywords and the service set of keywords;
a mapping unit (140) configured to discover semantic services that are configured to match the service request, a semantic service being indentified by identifying a request ontology having concepts representing one or more keywords of the request set, and computing a number of concepts related to the service request and the semantic service, the respective number of concepts being used to create a list of semantic services which is ranked according to the number of common concepts with the service request; and
a ranking unit (150) configured to further modify the ranking of the list of semantic services using one of the following criteria: quality weights for quality of service parameters of the identified service and a usage index of the identified service.

2. The system (100) of claim 1, the enhancement unit (120) further configured to: identify a further related keyword, the further related keyword being represented by a concept of a domain independent ontology, the concept of the domain independent ontology having a relation to a still further ontology concept that represents a further keyword of the request set of keywords; and specify a service category of the service using the further related keyword.

3. The system (100) of any one of the claims 1 or 2, the matching unit (130) further configured to compute the similarity by identifying a reduced representation of the enhanced request set (132) of keywords, by identifying a further reduced representation of the service set (124) of keywords, and by identifying the similarity with a value to which the reduced representation and the further reduced representation are mapped.

4. The system (100) of claim 3, the reduced representation and the further reduced representation comprising representations of selected correlations between keywords of documents related to a plurality of services and the documents related to the plurality of services.

5. The system (100) of claim 4, the matching unit (130) further configured to compute the similarity by using latent semantic indexing.

6. The system (100) of any one of the claims 1 to 5, the mapping unit (140) being further configured to identify a semantic service that is to match the service request (112) and that is annotated according to a service ontology by identifying a request ontology having concepts representing one or more keywords of the request set (122) of keywords and by using a mapping between the concepts representing the one or more keywords and concepts of the semantic service to compute a number of concepts related to the service request (112) and the semantic service.

7. The system (100) of any one of the claims 1 to 6, the preprocessing unit (110) further configured to identify a keyword of the service set (124) of keywords with a term extracted from any one of a group of tags including: a document tag of a document related to the service and a tag of an operation parameter of the service.

8. A method (400) comprising:
receiving a service request and transforming the service request to a request set of keywords, which includes parsing the service request and identifying keywords of the request set of keywords, whereby terms of the service request are transformed into terms in a standardized format and the keywords of the request set are identified with the standardized terms, wherein such preprocessing includes at least one of the following processes: removal of markups, translation of upper case characters into lower case, punctuation removal, white space removal used as a term delimiter, stoplist removal and stemming to strip word endings; and
computing (430) an enhanced request set of keywords comprising keywords of a request set of keywords of a service request and an enhancement keyword, the enhancement keyword being represented by a concept of a first ontology that has a relation to a concept of a second ontology representing a keyword of the request set of keywords, the first ontology and the second ontology being elements of an ontology framework, the ontology framework having a domain independent upper ontology, a mid-level ontology and a domain ontology level, the upper ontology being used to identify a root concept that is a direct or indirect super-concept of concepts representing all or a substantial number of keywords of the service request, ontologies of the domain ontology level being used to identify a sub-concept of a concept representing a keyword of the service request and the mid-level ontology serving as a bridge between the upper ontology and the domain ontology level;
identifying (435) a service to match the service request by computing a similarity between the enhanced request set of keywords and a service set of keywords of the service using projections of a multi-dimensional vector space representing the enhanced request set of keywords and the service set of keywords onto a subspace that includes representations of selected correlations between keywords of documents related to a set of services and the documents of the set of services, resulting in a list of services including the identified service which is ranked with respect to a further identified service according to the similarity between the enhanced request set of keywords and the service set of keywords;
discovering semantic services that are configured to match the service request, a semantic service being indentified by identifying a request ontology having concepts representing one or more keywords of the request set, and computing a number of concepts related to the service request and the semantic service, the respective number of concepts being used to create a list of semantic services which is ranked according to the number of common concepts with the service request; and
further modifying the ranking of the list of semantic services using one of the following criteria: quality weights for quality of service parameters of the identified service and a usage index of the identified service.

9. The method (400) of claim 8, further comprising:
identifying a further related keyword, the further related keyword being represented by a concept of a domain independent ontology, the concept of the domain independent ontology having a relation to a still further ontology concept that represents a further keyword of the request set of keywords; and
specifying a service category of the service using the further related keyword.

10. The method (400) of any one of the claims 8 or 9, computing the similarity comprising identifying a reduced representation of the enhanced request set of keywords, identifying a further reduced representation of the service set of keywords, and identifying the similarity with a value to which the reduced representation and the further reduced representation are mapped.

11. The method (400) of claim 10, the reduced representation and the further reduced representation comprising representations of selected correlations between keywords of documents related to a plurality of services and the documents related to the plurality of services.

12. The method (400) of claim 11, computing the similarity by using latent semantic indexing.

13. The method (400) of any one of the claims 8 to 12, further ranking (440) the identified, service with respect to a further service according to the similarity between the enhanced request set of keywords and the service set of keywords.

14. The method (400) of any one of the claims 8 to 13, further ranking (450) the identified service with respect to a further service based on any one of a group of criteria including: quality weights for quality of service parameters of the identified service and a usage index of the identified service.

15. The method (400) of any one of the claims 8 to 14, further identifying (445) a semantic service to match the service request and annotated according to a service ontology by identifying a request ontology having concepts representing one or more keywords of the request set of keywords and by using a mapping between the concepts representing the one or more keywords and concepts of the semantic service to compute a number of concepts related to the service request and the semantic service.

16. The method (400) of any one of the claims 8 to 15, further parsing (410) the service request and identifying (415) the keywords of the request set of keywords with terms of the service request in a standardized format.

17. The method (400) of any one of the claims 8 to 16, further parsing (420) a document related to the service and identifying (425) the keywords of the service set of keywords with terms of the document in a standardized format.

18. The method (400) of claim 17, identifying (425) a keyword of the service set of keywords with a term extracted from any one of a group of tags including:
a document tag of a document related to the service and a tag of an operation parameter of the service.

19. A computer program product (500) having instructions that are executable by a computer system, the computer program product (500) comprising instructions of:
a preprocessing unit configured to receive a service request and to transform the service request to a request set of keywords, which includes parsing the service request and identifying keywords of the request set of keywords, whereby terms of the service request are transformed into terms in a standardized format and the keywords of the request set are identified with the standardized terms, wherein such preprocessing includes at least one of the following processes: removal of markups, translation of upper case characters into lower case, punctuation removal, white space removal used as a term delimiter, stoplist removal and stemming to strip word endings; and
an enhancement unit (120) configured to compute an enhanced request set (132) of keywords comprising keywords of the request set (122) of keywords of the service request (112) and an enhancement keyword, the enhancement keyword being represented by a concept of a first ontology that has a relation to a concept of a second ontology representing a keyword of the request set of keywords, the first ontology and the second ontology being elements of an ontology framework, the ontology framework having an upper ontology, a mid-level ontology and a domain ontology level, the upper ontology being used to identify a root concept that is a direct or indirect super-concept of concepts representing all or a substantial number of keywords of the service request, ontologies of the domain ontology level being used to identify a sub-concept of a concept representing a keyword of the service request and the mid-level ontology serving as a bridge between the upper ontology and the domain ontology level;
a matching unit (130) configured to identify a service to match the service request (112) by computing a similarity between the enhanced request set (132) of keywords and a service set (124) of keywords of the service using projections of a multi-dimensional vector space representing the enhanced request set of keywords and the service set of keywords onto a subspace that includes representations of selected correlations between keywords of documents related to a set of services and the documents of the set of services, resulting in a list of services including the identified service which is ranked with respect to a further identified service according to the similarity between the enhanced request set of keywords and the service set of keywords;
a mapping unit (140) configured to discover semantic services that are configured to match the service request, a semantic service being indentified by identifying a request ontology having concepts representing one or more keywords of the request set, and computing a number of concepts related to the service request and the semantic service, the respective number of concepts being used to create a list of semantic services which is ranked according to the number of common concepts with the service request; and
a ranking unit configured to further modify the ranking of the list of semantic services using one of the following criteria: quality weights for quality of service parameters of the identified service and a usage index of the identified service.

## Patentansprüche

1. System (100), welches Folgendes aufweist:
eine Vorverarbeitungseinheit, die dafür ausgelegt ist, eine Dienstanforderung zu empfangen und die Dienstanforderung in einen Anforderungssatz von Schlüsselwörtern umzuwandeln, wobei die Dienstanforderung geparst wird und Schlüsselwörter des Anforderungssatzes von Schlüsselwörtern identifiziert werden, wobei Terme der Dienstanforderung in Terme in einem standardisierten Format umgewandelt werden und die Schlüsselwörter des Anforderungssatzes mit den standardisierten Termen identifiziert werden, wobei diese Vorverarbeitung wenigstens einen der folgenden Prozesse aufweist: Entfernen von Markups, Übersetzen von Großbuchstaben in Kleinbuchstaben, Interpunktionsentfernung, Entfernung weißer Räume, die als Termbegrenzer verwendet werden, Stopplistenentfernung und Stammbildung, um Wortendungen zu beseitigen, und
eine Erweiterungseinheit (120), die dafür ausgelegt ist, einen erweiterten Anforderungssatz (132) von Schlüsselwörtern zu berechnen, welcher Schlüsselwörter des Anforderungssatzes (122) von Schlüsselwörtern der Dienstanforderung (112) und ein Erweiterungsschlüsselwort aufweist, wobei das Erweiterungsschlüsselwort durch ein Konzept einer ersten Ontologie repräsentiert ist, das eine Beziehung zu einem Konzept einer zweiten Ontologie, wodurch ein Schlüsselwort des Anforderungssatzes von Schlüsselwörtern repräsentiert ist, aufweist, wobei die erste Ontologie und die zweite Ontologie Elemente eines Ontologierahmens sind, wobei der Ontologierahmen eine obere Ontologie, eine Ontologie mittlerer Ebene und eine Domänenontologieebene aufweist, wobei die obere Ontologie verwendet wird, um ein Grundkonzept zu identifizieren, welches ein direktes oder indirektes Überkonzept von Konzepten, wodurch alle oder eine erhebliche Anzahl der Schlüsselwörter der Dienstanforderung repräsentiert sind, ist, wobei Ontologien der Domänenontologieebene verwendet werden, um ein Unterkonzept eines Konzepts zu identifizieren, wodurch ein Schlüsselwort der Dienstanforderung repräsentiert ist, und die Ontologie mittlerer Ebene als eine Brücke zwischen der oberen Ontologie und der Domänenontologieebene dient, und
eine Vergleichseinheit (130), die dafür ausgelegt ist, einen Dienst zu identifizieren, der mit der Dienstanforderung (112) übereinstimmt, durch Berechnen einer Ähnlichkeit zwischen dem erweiterten Anforderungssatz (132) von Schlüsselwörtern und einem Dienstsatz (124) von Schlüsselwörtern des Dienstes unter Verwendung von Projektionen eines mehrdimensionalen Vektorraums, wodurch der erweiterte Anforderungssatz von Schlüsselwörtern repräsentiert ist, und des Dienstsatzes von Schlüsselwörtern auf einen Unterraum, der Repräsentationen ausgewählter Korrelationen zwischen Schlüsselwörtern von Dokumenten in Bezug auf einen Satz von Diensten und den Dokumenten des Satzes von Diensten aufweist, woraus sich eine Liste von Diensten ergibt, welche den identifizierten Dienst einschließt, dessen Rang in Bezug auf einen weiteren identifizierten Dienst sich entsprechend der Ähnlichkeit zwischen dem erweiterten Anforderungssatz von Schlüsselwörtern und dem Dienstsatz von Schlüsselwörtern ergibt,
eine Abbildungseinheit (140), die dafür ausgelegt ist, semantische Dienste zu entdecken, die dafür ausgelegt sind, mit der Dienstanforderung übereinzustimmen, wobei ein semantischer Dienst durch Identifizieren einer Anforderungsontologie mit Konzepten, welche ein oder mehrere Schlüsselwörter des Anforderungssatzes repräsentieren, und Berechnen einer Anzahl von Konzepten in Bezug auf die Dienstanforderung und den semantischen Dienst identifiziert wird, wobei die jeweilige Anzahl von Konzepten verwendet wird, um eine Liste semantischer Dienste zu erzeugen, deren Rang sich entsprechend der Anzahl der gemeinsamen Konzepte mit der Dienstanforderung ergibt, und
eine Rangbildungseinheit (150), die dafür ausgelegt ist, ferner die Rangfolge der Liste semantischer Dienste unter Verwendung eines der folgenden Kriterien zu modifizieren: Qualitätsgewichte für die Qualität von Dienstparametern des identifizierten Dienstes und ein Verwendungsindex des identifizierten Dienstes.

2. System (100) nach Anspruch 1, wobei die Erweiterungseinheit (120) ferner dafür ausgelegt ist, Folgendes auszuführen: Identifizieren eines weiteren verwandten Schlüsselworts, wobei das weitere verwandte Schlüsselwort durch ein Konzept einer domänenunabhängigen Ontologie repräsentiert wird, wobei das Konzept der domänenunabhängigen Ontologie eine Beziehung mit einem weiteren Ontologiekonzept hat, das ein weiteres Schlüsselwort des Anforderungssatzes von Schlüsselwörtern repräsentiert, und Spezifizieren einer Dienstkategorie des Dienstes unter Verwendung des weiteren verwandten Schlüsselworts.

3. System (100) nach einem der Ansprüche 1 oder 2, wobei die Vergleichseinheit (130) ferner dafür ausgelegt ist, die Ähnlichkeit zu berechnen, indem sie eine reduzierte Repräsentation des erweiterten Anforderungssatzes (132) von Schlüsselwörtern identifiziert, indem sie eine weitere reduzierte Repräsentation des Dienstsatzes (124) von Schlüsselwörtern identifiziert und indem sie die Ähnlichkeit mit einem Wert identifiziert, auf den die reduzierte Repräsentation und die weitere reduzierte Repräsentation abgebildet sind.

4. System (100) nach Anspruch 3, wobei die reduzierte Repräsentation und die weitere reduzierte Repräsentation Repräsentationen ausgewählter Korrelationen zwischen Schlüsselwörtern von Dokumenten, die sich auf eine Mehrzahl von Diensten beziehen, und den Dokumenten, die sich auf die Mehrzahl von Diensten beziehen, aufweisen.

5. System (100) nach Anspruch 4, wobei die Vergleichseinheit (130) ferner dafür ausgelegt ist, die Ähnlichkeit unter Verwendung einer latenten semantischen Indexierung zu berechnen.

6. System (100) nach einem der Ansprüche 1 bis 5, wobei die Abbildungseinheit (140) ferner dafür ausgelegt ist, einen semantischen Dienst zu identifizieren, der zur Dienstanforderung (112) passen soll und der entsprechend einer Dienstontologie annotiert wird, indem eine Anforderungsontologie mit Konzepten, die ein oder mehrere Schlüsselwörter des Anforderungssatzes (122) von Schlüsselwörtern repräsentieren, identifiziert wird und indem eine Abbildung zwischen den Konzepten, die das eine oder die mehreren Schlüsselwörter repräsentieren, und Konzepten des semantischen Dienstes verwendet wird, um eine Anzahl von Konzepten zu berechnen, die sich auf die Dienstanforderung (112) und den semantischen Dienst beziehen.

7. System (100) nach einem der Ansprüche 1 bis 6, wobei die Vorverarbeitungseinheit (110) ferner dafür ausgelegt ist, ein Schlüsselwort des Dienstsatzes (124) von Schlüsselwörtern mit einem Term zu identifizieren, der aus einem von einer Gruppe von Tags extrahiert wurde, welche folgende aufweist: ein Dokumenten-Tag eines sich auf den Dienst beziehenden Dokuments und ein Tag eines Operationsparameters des Dienstes.

8. Verfahren (400), welches folgende Schritte aufweist:
Empfangen einer Dienstanforderung und Umwandeln der Dienstanforderung in einen Anforderungssatz von Schlüsselwörtern, wobei die Dienstanforderung geparst wird und Schlüsselwörter des Anforderungssatzes von Schlüsselwörtern identifiziert werden, wobei Terme der Dienstanforderung in Terme in einem standardisierten Format umgewandelt werden und die Schlüsselwörter des Anforderungssatzes mit den standardisierten Termen identifiziert werden, wobei diese Vorverarbeitung wenigstens einen der folgenden Prozesse aufweist: Entfernen von Markups, Übersetzen von Großbuchstaben in Kleinbuchstaben, Interpunktionsentfernung, Entfernung weißer Räume, die als Termbegrenzer verwendet werden, Stopplistenentfernung und Stammbildung, um Wortendungen zu beseitigen, und
Berechnen (430) eines erweiterten Anforderungssatzes von Schlüsselwörtern, welcher Schlüsselwörter eines Anforderungssatzes von Schlüsselwörtern einer Dienstanforderung und ein Erweiterungsschlüsselwort aufweist, wobei das Erweiterungsschlüsselwort durch ein Konzept einer ersten Ontologie repräsentiert ist, das eine Beziehung zu einem Konzept einer zweiten Ontologie, wodurch ein Schlüsselwort des Anforderungssatzes von Schlüsselwörtern repräsentiert ist, aufweist, wobei die erste Ontologie und die zweite Ontologie Elemente eines Ontologierahmens sind, wobei der Ontologierahmen eine domänunabhängige obere Ontologie, eine Ontologie mittlerer Ebene und eine Domänenontologieebene aufweist, wobei die obere Ontologie verwendet wird, um ein Grundkonzept zu identifizieren, welches ein direktes oder indirektes Überkonzept von Konzepten ist, wodurch alle oder eine erhebliche Anzahl der Schlüsselwörter der Dienstanforderung repräsentiert sind, wobei Ontologien der Domänenontologieebene verwendet werden, um ein Unterkonzept eines Konzepts zu identifizieren, wodurch ein Schlüsselwort der Dienstanforderung repräsentiert ist, und die Ontologie mittlerer Ebene als eine Brücke zwischen der oberen Ontologie und der Domänenontologieebene dient,
Identifizieren (435) eines Dienstes, der mit der Dienstanforderung übereinstimmt, durch Berechnen einer Ähnlichkeit zwischen dem erweiterten Anforderungssatz von Schlüsselwörtern und einem Dienstsatz von Schlüsselwörtern des Dienstes unter Verwendung von Projektionen eines mehrdimensionalen Vektorraums, wodurch der erweiterte Anforderungssatz von Schlüsselwörtern repräsentiert ist, und des Dienstsatzes von Schlüsselwörtern auf einen Unterraum, der Repräsentationen ausgewählter Korrelationen zwischen Schlüsselwörtern von Dokumenten in Bezug auf einen Satz von Diensten und den Dokumenten des Satzes von Diensten aufweist, woraus sich eine Liste von Diensten ergibt, welche den identifizierten Dienst einschließt, dessen Rang in Bezug auf einen weiteren identifizierten Dienst sich entsprechend der Ähnlichkeit zwischen dem erweiterten Anforderungssatz von Schlüsselwörtern und dem Dienstsatz von Schlüsselwörtern ergibt,
Entdecken semantischer Dienste, die dafür ausgelegt sind, mit der Dienstanforderung übereinzustimmen, wobei ein semantischer Dienst durch Identifizieren einer Anforderungsontologie mit Konzepten, welche ein öder mehrere Schlüsselwörter des Anforderungssatzes repräsentieren, und Berechnen einer Anzahl von Konzepten in Bezug auf die Dienstanforderung und den semantischen Dienst identifiziert wird, wobei die jeweilige Anzahl von Konzepten verwendet wird, um eine Liste semantischer Dienste zu erzeugen, deren Rang sich entsprechend der Anzahl der gemeinsamen Konzepte mit der Dienstanforderung ergibt, und
ferner Modifizieren der Rangfolge der Liste semantischer Dienste unter Verwendung eines der folgenden Kriterien: Qualitätsgewichte für die Qualität von Dienstparametern des identifizierten Dienstes und ein Verwendungsindex des identifizierten Dienstes.

9. Verfahren (400) nach Anspruch 8, welches ferner Folgendes aufweist: Identifizieren eines weiteren verwandten Schlüsselworts, wobei das weitere verwandte Schlüsselwort durch ein Konzept einer domänenunabhängigen Ontologie repräsentiert wird, wobei das Konzept der domänenunabhängigen Ontologie eine Beziehung mit einem weiteren Ontologiekonzept hat, das ein weiteres Schlüsselwort des Anforderungssatzes von Schlüsselwörtern repräsentiert, und Spezifizieren einer Dienstkategorie des Dienstes unter Verwendung des weiteren verwandten Schlüsselworts.

10. Verfahren (400) nach einem der Ansprüche 8 oder 9, wobei das Berechnen der Ähnlichkeit ferner Folgendes aufweist: Identifizieren einer reduzierten Repräsentation des erweiterten Anforderungssatzes von Schlüsselwörtern, Identifizieren einer weiteren reduzierten Repräsentation des Dienstsatzes von Schlüsselwörtern und Identifizieren der Ähnlichkeit mit einem Wert, auf den die reduzierte Repräsentation und die weitere reduzierte Repräsentation abgebildet sind.

11. Verfahren (400) nach Anspruch 10, wobei die reduzierte Repräsentation und die weitere reduzierte Repräsentation Repräsentationen ausgewählter Korrelationen zwischen Schlüsselwörtern von Dokumenten, die sich auf eine Mehrzahl von Diensten beziehen, und den Dokumenten, die sich auf die Mehrzahl von Diensten beziehen, aufweisen.

12. Verfahren (400) nach Anspruch 11, wobei die Ähnlichkeit unter Verwendung einer latenten semantischen Indexierung berechnet wird.

13. Verfahren (400) nach einem der Ansprüche 8 bis 12, wobei ferner der identifizierte Dienst in Bezug auf einen weiteren Dienst entsprechend der Ähnlichkeit zwischen dem erweiterten Anforderungssatz von Schlüsselwörtern und dem Dienstsatz von Schlüsselwörtern im Rang festgelegt wird (440).

14. Verfahren (400) nach einem der Ansprüche 8 bis 13, wobei ferner der identifizierte Dienst in Bezug auf einen weiteren Dienst auf der Grundlage eines von einer Gruppe von Kriterien im Rang festgelegt wird (450), welche Folgendes aufweist: Qualitätsgewichte für die Qualität der Dienstparameter des identifizierten Dienstes und einen Verwendungsindex des identifizierten Dienstes.

15. Verfahren (400) nach einem der Ansprüche 8 bis 14, wobei ferner ein semantischer Dienst identifiziert wird (445), der mit der Dienstanforderung übereinstimmt, und entsprechend einer Dienstontologie annotiert wird, indem eine Anforderungsontologie mit Konzepten, die ein oder mehrere Schlüsselwörter des Anforderungssatzes von Schlüsselwörtern repräsentieren, identifiziert wird und indem eine Abbildung zwischen den Konzepten, die das eine oder die mehreren Schlüsselwörter repräsentieren, und Konzepten des semantischen Dienstes verwendet wird, um eine Anzahl von Konzepten zu berechnen, die sich auf die Dienstanforderung und den semantischen Dienst beziehen.

16. Verfahren (400) nach einem der Ansprüche 8 bis 15, wobei ferner die Dienstanforderung geparst wird (410) und die Schlüsselwörter des Anforderungssatzes von Schlüsselwörtern mit Termen der Dienstanforderung in einem standardisierten Format identifiziert werden (415).

17. Verfahren (400) nach einem der Ansprüche 8 bis 16, wobei ferner ein Dokument, das sich auf den Dienst bezieht, geparst wird (420) und die Schlüsselwörter des Dienstsatzes von Schlüsselwörtern mit Termen des Dokuments in einem standardisierten Format identifiziert werden (425).

18. Verfahren (400) nach Anspruch 17, wobei ein Schlüsselwort des Dienstsatzes von Schlüsselwörtern mit einem Term identifiziert wird (425), der aus einem von einer Gruppe von Tags extrahiert wurde, welche folgende aufweist:
ein Dokumenten-Tag eines sich auf den Dienst beziehenden Dokuments und ein Tag eines Operationsparameters des Dienstes.

19. Computerprogrammprodukt (500) mit Befehlen, die durch ein Computersystem ausführbar sind, wobei das Computerprogrammprodukt (500) folgende Befehle aufweist:
eine Vorverarbeitungseinheit, die dafür ausgelegt ist, eine Dienstanforderung zu empfangen und die Dienstanforderung in einen Anforderungssatz von Schlüsselwörtern umzuwandeln, wobei die Dienstanforderung geparst wird und Schlüsselwörter des Anforderungssatzes von Schlüsselwörtern identifiziert werden, wobei Terme der Dienstanforderung in Terme in einem standardisierten Format umgewandelt werden und die Schlüsselwörter des Anforderungssatzes mit den standardisierten Termen identifiziert werden, wobei diese Vorverarbeitung wenigstens einen der folgenden Prozesse aufweist: Entfernen von Markups, Übersetzen von Großbuchstaben in Kleinbuchstaben, Interpunktionsentfernung, Entfernung weißer Räume, die als Termbegrenzer verwendet werden, Stopplistenentfernung und Stammbildung, um Wortendungen zu beseitigen, und
eine Erweiterungseinheit (120), die dafür ausgelegt ist, einen erweiterten Anforderungssatz (132) von Schlüsselwörtern zu berechnen, welcher Schlüsselwörter des Anforderungssatzes (122) von Schlüsselwörtern der Dienstanforderung (112) und ein Erweiterungsschlüsselwort aufweist, wobei das Erweiterungsschlüsselwort durch ein Konzept einer ersten Ontologie repräsentiert ist, das eine Beziehung zu einem Konzept einer zweiten Ontologie, wodurch ein Schlüsselwort des Anforderungssatzes von Schlüsselwörtern repräsentiert ist, aufweist, wobei die erste Ontologie und die zweite Ontologie Elemente eines Ontologierahmens sind, wobei der Ontologierahmen eine obere Ontologie, eine Ontologie mittlerer Ebene und eine Domänenontologieebene aufweist, wobei die obere Ontologie verwendet wird, um ein Grundkonzept zu identifizieren, welches ein direktes oder indirektes Überkonzept von Konzepten, wodurch alle oder eine erhebliche Anzahl der Schlüsselwörter der Dienstanforderung repräsentiert sind, ist, wobei Ontologien der Domänenontologieebene verwendet werden, um ein Unterkonzept eines Konzepts zu identifizieren, wodurch ein Schlüsselwort der Dienstanforderung repräsentiert ist, und die Ontologie mittlerer Ebene als eine Brücke zwischen der oberen Ontologie und der Domänenontologieebene dient,
eine Vergleichseinheit (130), die dafür ausgelegt ist, einen Dienst zu identifizieren, der mit der Dienstanforderung (112) übereinstimmt, durch Berechnen einer Ähnlichkeit zwischen dem erweiterten Anforderungssatz (132) von Schlüsselwörtern und einem Dienstsatz (124) von Schlüsselwörtern des Dienstes unter Verwendung von Projektionen eines mehrdimensionalen Vektorraums, wodurch der erweiterte Anforderungssatz von Schlüsselwörtern repräsentiert ist, und des Dienstsatzes von Schlüsselwörtern auf einen Unterraum, der Repräsentationen ausgewählter Korrelationen zwischen Schlüsselwörtern von Dokumenten in Bezug auf einen Satz von Diensten und den Dokumenten des Satzes von Diensten aufweist, woraus sich eine Liste von Diensten ergibt, welche den identifizierten Dienst einschließt, dessen Rang in Bezug auf einen weiteren identifizierten Dienst sich entsprechend der Ähnlichkeit zwischen dem erweiterten Anforderungssatz von Schlüsselwörtern und dem Dienstsatz von Schlüsselwörtern ergibt,
eine Abbildungseinheit (140), die dafür ausgelegt ist, semantische Dienste zu entdecken, die dafür ausgelegt sind, mit der Dienstanforderung übereinzustimmen, wobei ein semantischer Dienst durch Identifizieren einer Anforderungsontologie mit Konzepten, welche ein oder mehrere Schlüsselwörter des Anforderungssatzes repräsentieren, und Berechnen einer Anzahl von Konzepten in Bezug auf die Dienstanforderung und den semantischen Dienst identifiziert wird, wobei die jeweilige Anzahl von Konzepten verwendet wird, um eine Liste semantischer Dienste zu erzeugen, deren Rang sich entsprechend der Anzahl der gemeinsamen Konzepte mit der Dienstanforderung ergibt, und
eine Rangbildungseinheit, die dafür ausgelegt ist, ferner die Rangfolge der Liste semantischer Dienste unter Verwendung eines der folgenden Kriterien zu modifizieren: Qualitätsgewichte für die Qualität von Dienstparametern des identifizierten Dienstes und ein Verwendungsindex des identifizierten Dienstes.

## Revendications

1. Système (100) comprenant :
une unité de prétraitement configurée pour recevoir une demande de services et pour transformer la demande de services en un ensemble de demandes de mots clés, laquelle comprend d'analyser la demande de services et d'identifier des mots clés de l'ensemble de demandes de mots clés, de sorte que des termes de la demande de services sont transformés en termes dans un format standardisé et les mots clés de l'ensemble de demandes sont identifiés avec les termes standardisés, dans lequel ce prétraitement comprend au moins l'un des processus suivants : le retrait d'indications typographiques, la traduction de caractères en majuscules en caractères en minuscules, le retrait de la ponctuation, le retrait de l'espace blanc utilisé en tant que délimiteur de terme, le retrait de la liste d'exclusion et l'élimination des terminaisons de mots ; et
une unité d'enrichissement (120) configurée pour calculer un ensemble de demandes enrichi (132) de mots clés comportant des mots clés de l'ensemble de demandes (122) de mots clés de la demande de service (112) et un mot clé d'enrichissement, le mot clé d'enrichissement étant représenté par un concept d'une première ontologie qui a une relation avec un concept d'une seconde ontologie représentant un mot clé de l'ensemble de demandes de mots clés, la première ontologie et la seconde ontologie étant des éléments d'un cadre conceptuel d'ontologie, le cadre conceptuel d'ontologie ayant une ontologie supérieure, une ontologie de niveau intermédiaire et un niveau d'ontologie de domaine, l'ontologie supérieure étant utilisée pour identifier un concept racine qui est un super concept direct ou indirect de concepts représentant la totalité ou un nombre substantiel de mots clés de la demande de services, des ontologies du niveau d'ontologie de domaine étant utilisées pour identifier un sous concept d'un concept représentant un mot clé de la demande de services et l'ontologie de niveau intermédiaire servant de pont entre l'ontologie supérieure et le niveau d'ontologie de domaine ; et
une unité de correspondance (130) configurée pour identifier un service pour qu'il corresponde à la demande de service (112) en calculant une similitude entre l'ensemble de demandes enrichi (132) de mots clés et un ensemble de services (124) de mots clés du service en utilisant des projections d'un espace vectoriel multidimensionnel représentant l'ensemble de demandes enrichi de mots clés et l'ensemble de services de mots clés sur un sous espace qui comprend des représentations de corrélations sélectionnées entre des mots clés de documents associés à un ensemble de services et les documents de l'ensemble de services, aboutissant en résultat à une liste de services comprenant le service identifié lequel est classé par rapport à un service identifié supplémentaire conformément à la similitude entre l'ensemble de demandes enrichi de mots clés et l'ensemble de services de mots clés ;
une unité de mappage (140) configurée pour découvrir des services sémantiques qui sont configurés pour faire correspondre la demande de services, un service sémantique étant identifié en identifiant une ontologie de demande ayant des concepts représentant un ou plusieurs mots clés de l'ensemble de demandes, et en calculant un nombre de concepts associés à la demande de services et au service sémantique, le nombre respectif de concepts étant utilisé pour créer une liste de services sémantiques lesquels sont classés conformément au nombre de concepts communs avec la demande de services ; et
une unité de classement (150) configurée pour modifier davantage le classement de la liste de services sémantiques en utilisant l'un des critères suivants : des pondérations de qualité pour la qualité de paramètres de service du service identifié et un indice d'utilisation du service identifié.

2. Système (100) selon la revendication 1, l'unité d'enrichissement (120) étant en outre configurée pour : identifier un mot clé associé supplémentaire, le mot clé associé supplémentaire étant représenté par un concept d'une ontologie indépendante du domaine, le concept de l'ontologie indépendante du domaine ayant une relation à un concept d'ontologie supplémentaire qui représente un mot clé supplémentaire de l'ensemble de demandes de mots clés ; et spécifier une catégorie de service du service en utilisant le mot clé associé supplémentaire.

3. Système (100) selon l'une quelconque des revendications 1 ou 2, l'unité de correspondance (130) étant en outre configurée pour calculer la similitude en identifiant une représentation réduite de l'ensemble de demandes enrichi (132) de mots clés, en identifiant une représentation réduite supplémentaire de l'ensemble de services (124) de mots clés, et en identifiant la similitude avec une valeur avec laquelle la représentation réduite et la représentation réduite supplémentaire sont mappées.

4. Système (100) selon la revendication 3, la représentation réduite et la représentation réduite supplémentaire comportant des représentations de corrélations sélectionnées entre des mots clés de documents associés à une pluralité de services et les documents associés à la pluralité de services.

5. Système (100) selon la revendication 4, l'unité de correspondance (130) étant en outre configurée pour calculer la similitude en utilisant une indexation sémantique latente.

6. Système (100) selon l'une quelconque des revendications 1 à 5, l'unité de mappage (140) étant en outre configurée pour identifier un service sémantique lequel doit correspondre à la demande de service (112) et lequel est annoté conformément à une ontologie de service en identifiant une ontologie de demande ayant des concepts représentant un ou plusieurs mots clés de l'ensemble de demandes (122) de mots clés et en utilisant un mappage entre les concepts représentant le ou les mots clés, et des concepts du service sémantique pour calculer un nombre de concepts associés à la demande de service (112) et au service sémantique.

7. Système (100) selon l'une quelconque des revendications 1 à 6, l'unité de prétraitement (110) étant en outre configurée pour identifier un mot clé de l'ensemble de services (124) de mots clés avec un terme extrait de l'un quelconque d'un groupe d'étiquettes comprenant : une étiquette de document d'un document associé au service et une étiquette d'un paramètre d'opération du service.

8. Procédé (400) comportant les étapes consistant à :
recevoir une demande de services et transformer la demande de services en un ensemble de demandes de mots clés, laquelle comprend d'analyser la demande de services et d'identifier des mots clés de l'ensemble de demandes de mots clés, de sorte que des termes de la demande de services sont transformés en termes dans un format standardisé et les mots clés de l'ensemble de demandes sont identifiés avec les termes standardisés, dans lequel ce prétraitement comprend au moins l'un des processus suivants : le retrait d'indications typographiques, la traduction de caractères en majuscules en caractères en minuscules, le retrait de la ponctuation, le retrait de l'espace blanc utilisé en tant que délimiteur de terme, le retrait de la liste d'exclusion et l'élimination des terminaisons de mots ; et
calculer (430) un ensemble de demandes enrichi de mots clés comportant des mots clés de l'ensemble de demandes de mots clés d'une demande de service et un mot clé d'enrichissement, le mot clé d'enrichissement étant représenté par un concept d'une première ontologie qui a une relation avec un concept d'une seconde ontologie représentant un mot clé de l'ensemble de demandes de mots clés, la première ontologie et la seconde ontologie étant des éléments d'un cadre conceptuel d'ontologie, le cadre conceptuel d'ontologie ayant une ontologie supérieure indépendante du domaine, une ontologie de niveau intermédiaire et un niveau d'ontologie de domaine, l'ontologie supérieure étant utilisée pour identifier un concept racine qui est un super concept direct ou indirect de concepts représentant la totalité ou un nombre substantiel de mots clés de la demande de services, des ontologies du niveau d'ontologie de domaine étant utilisées pour identifier un sous concept d'un concept représentant un mot clé de la demande de services et l'ontologie de niveau intermédiaire servant de pont entre l'ontologie supérieure et le niveau d'ontologie de domaine ; et
identifier (435) un service pour qu'il corresponde à la demande de service en calculant une similitude entre l'ensemble de demandes enrichi de mots clés et un ensemble de services (124) de mots clés du service en utilisant des projections d'un espace vectoriel multidimensionnel représentant l'ensemble de demandes enrichi de mots clés et l'ensemble de services de mots clés sur un sous espace qui comprend des représentations de corrélations sélectionnées entre des mots clés de documents associés à un ensemble de services et les documents de l'ensemble de services, aboutissant en résultat à une liste de services comprenant le service identifié lequel est classé par rapport à un service identifié supplémentaire conformément à la similitude entre l'ensemble de demandes enrichi de mots clés et l'ensemble de services de mots clés ;
découvrir des services sémantiques qui sont configurés pour faire correspondre la demande de services, un service sémantique étant identifié en identifiant une ontologie de demande ayant des concepts représentant un ou plusieurs mots clés de l'ensemble de demandes, et en calculant un certain nombre de concepts associés à la demande de services et au service sémantique, le nombre respectif de concepts étant utilisé pour créer une liste de services sémantiques lesquels sont classés conformément au nombre de concepts communs avec la demande de services ; et
modifier davantage le classement de la liste de services sémantiques en utilisant l'un des critères suivants : des pondérations de qualité pour la qualité de paramètres de service du service identifié et un indice d'utilisation du service identifié.

9. Procédé (400) selon la revendication 8, comportant en outre :
d'identifier un mot clé associé supplémentaire, le mot clé associé supplémentaire étant représenté par un concept d'une ontologie indépendante du domaine, le concept de l'ontologie indépendante du domaine ayant une relation à un concept d'ontologie supplémentaire qui représente un mot clé supplémentaire de l'ensemble de demandes de mots clés ; et
de spécifier une catégorie de service du service en utilisant le mot clé associé supplémentaire.

10. Procédé (400) selon l'une quelconque des revendications 8 ou 9, calculant la similitude en identifiant une représentation réduite de l'ensemble de demandes enrichi de mots clés, en identifiant une représentation réduite supplémentaire de l'ensemble de services (124) de mots clés, et en identifiant la similitude avec une valeur avec laquelle la représentation réduite et la représentation réduite supplémentaire sont mappées.

11. Procédé (400) selon la revendication 10, la représentation réduite et la représentation réduite supplémentaire comportant des représentations de corrélations sélectionnées entre des mots clés de documents associés à une pluralité de services et les documents associés à la pluralité de services.

12. Procédé (400) selon la revendication 11, calculant la similitude en utilisant une indexation sémantique latente.

13. Procédé (400) selon l'une quelconque des revendications 8 à 12, classant en outre (440) le service identifié par rapport à un service supplémentaire conformément à la similitude entre l'ensemble de demandes enrichi de mots-clés et l'ensemble de services de mots clés.

14. Procédé (400) selon l'une quelconque des revendications 8 à 13, classant en outre (450) le service identifié par rapport à service supplémentaire sur la base de l'un quelconque d'un groupe de critères comprenant : des pondérations de qualité pour la qualité de paramètres de service du service identifié et un indice d'utilisation du service identifié.

15. Procédé (400) selon l'une quelconque des revendications 8 à 14, comportant en outre d'identifier (445) un service sémantique lequel doit correspondre à la demande de service et lequel est annoté conformément à une ontologie de service en identifiant une ontologie de demande ayant des concepts représentant un ou plusieurs mots clés de l'ensemble de demandes de mots clés et en utilisant un mappage entre les concepts représentant le ou les mots clés, et des concepts du service sémantique pour calculer un nombre de concepts associés à la demande de service et au service sémantique.

16. Procédé (400) selon l'une quelconque des revendications 8 à 15, analysant en outre (410) la demande de services et identifiant (415) les mots clés de l'ensemble de demandes de mots clés avec les termes de la demande de service dans un format standardisé.

17. Procédé (400) selon l'une quelconque des revendications 8 à 16, analysant en outre (420) un document associé au service et identifiant (425) les mots clés de l'ensemble de services de mots clés avec les termes du document dans un format standardisé.

18. Procédé (400) selon la revendication 17, identifiant (425) un mot clé de l'ensemble de services de mots clés avec un terme extrait de l'un quelconque d'un groupe d'étiquettes comprenant :
une étiquette de document d'un document associé au service et une étiquette d'un paramètre d'opération du service.

19. Produit de programme informatique (500) ayant des instructions lesquelles sont exécutables par un système informatique, le produit de programme informatique (500) comportant des instructions de :
une unité de prétraitement configurée pour recevoir une demande de services et pour transformer la demande de services en un ensemble de demandes de mots clés, laquelle comprend d'analyser la demande de services et d'identifier des mots clés de l'ensemble de demandes de mots clés, de sorte que des termes de la demande de services sont transformés en termes dans un format standardisé et les mots clés de l'ensemble de demandes sont identifiés avec les termes standardisés, dans lequel ce prétraitement comprend au moins l'un des processus suivants : le retrait d'indications typographiques, la traduction de caractères en majuscules en caractères en minuscules, le retrait de la ponctuation, le retrait de l'espace blanc utilisé en tant que délimiteur de terme, le retrait de la liste d'exclusion et l'élimination des terminaisons de mots ; et
une unité d'enrichissement (120) configurée pour calculer un ensemble de demandes enrichi (132) de mots clés comportant des mots clés de l'ensemble de demandes (122) de mots clés de la demande de service (112) et un mot clé d'enrichissement, le mot clé d'enrichissement étant représenté par un concept d'une première ontologie qui a une relation avec un concept d'une seconde ontologie représentant un mot clé de l'ensemble de demandes de mots clés, la première ontologie et la seconde ontologie étant des éléments d'un cadre conceptuel d'ontologie, le cadre conceptuel d'ontologie ayant une ontologie supérieure, une ontologie de niveau intermédiaire et un niveau d'ontologie de domaine, l'ontologie supérieure étant utilisée pour identifier un concept racine qui est un super concept direct ou indirect de concepts représentant la totalité ou un nombre substantiel de mots clés de la demande de services, des ontologies du niveau d'ontologie de domaine étant utilisées pour identifier un sous concept d'un concept représentant un mot clé de la demande de services et l'ontologie de niveau intermédiaire servant de pont entre l'ontologie supérieure et le niveau d'ontologie de domaine ;
une unité de correspondance (130) configurée pour identifier un service pour qu'il corresponde à la demande de service (112) en calculant une similitude entre l'ensemble de demandes enrichi (132) de mots clés et un ensemble de services (124) de mots clés du service en utilisant des projections d'un espace vectoriel multidimensionnel représentant l'ensemble de demandes enrichi de mots clés et l'ensemble de services de mots clés sur un sous espace qui comprend des représentations de corrélations sélectionnées entre des mots clés de documents associés à un ensemble de services et les documents de l'ensemble de services, aboutissant en résultat à une liste de services comprenant le service identifié lequel est classé par rapport à un service identifié supplémentaire conformément à la similitude entre l'ensemble de demandes enrichi de mots clés et l'ensemble de services de mots clés ;
une unité de mappage (140) configurée pour découvrir des services sémantiques qui sont configurés pour faire correspondre la demande de services, un service sémantique étant identifié en identifiant une ontologie de demande ayant des concepts représentant un ou plusieurs mots clés de l'ensemble de demandes, et en calculant un nombre de concepts associés à la demande de services et au service sémantique, le nombre respectif de concepts étant utilisé pour créer une liste de services sémantiques lesquels sont classés conformément au nombre de concepts communs avec la demande de services ; et
une unité de classement configurée pour modifier davantage le classement de la liste de services sémantiques en utilisant l'un des critères suivants : des pondérations de qualité pour la qualité de paramètres de service du service identifié et un indice d'utilisation du service identifié.
